# EUROPÄISCHE PATENTSCHRIFT

(11) **EP 3 679 808 B1**
(45) Veröffentlichungstag und Bekanntmachung des Hinweises auf die Patenterteilung: **31.01.2024**
(21) Anmeldenummer: 20160601.9
(22) Anmeldetag: 19.12.2014
(51) Int. Cl.: A23N 17/00, A23N 12/08

(54) **TOASTER ZUM TOASTEN VON SAATGUT**
TOASTER FOR TOASTING SEEDS
DISPOSITIF DESTINÉ À GRILLER DES SEMENCES

(30) Priorität: 19.12.2013 DE 102013022027
(43) Veröffentlichungstag der Anmeldung: 15.07.2020
(62) Teilanmeldung aus: 14199169.5
(73) Patentinhaber: EST GmbH, 5132 Geretsberg (AT)
(72) Erfinder: NEUBAUER, Josef, 5132 Geretsberg (AT)
(74) Vertreter: Mader, Joachim

(56) Entgegenhaltungen:
- EP-A2- 1 623 633
- WO-A1-2013/171389
- DE-U1- 29 715 637
- US-A- 3 189 460
- US-A- 3 408 920
- US-A- 3 724 090

## Beschreibung

### 1. Gebiet der Erfindung

Die vorliegende Erfindung betrifft eine Vorrichtung und ein Verfahren zum Bearbeiten von körnerförmiger Saat. Insbesondere betrifft die vorliegende Erfindung eine Vorrichtung und ein Verfahren zum Rösten (Toasten) von Sojabohnen oder anderen Saaten.

### 2. Stand der Technik

Im Stand der Technik sind Vorrichtungen zum Rösten (Toasten) oder Erhitzen von körnerförmigem Saatgut, sogenannte Toaster bekannt. Die genannten Toaster werden zu mehr als ca. 95% zum Veredeln von Sojabohnen verwendet; daneben auch für Pferdebohnen, Getreide etc..

Der Toastvorgang ist notwendig, um die im Saatgut unerwünschten Trypsininhibitoren abzubauen, damit es als Futtermittel verwendet werden kann. Bei den Trypsininhibitoren handelt es sich um natürliche Insektizide, die als spezifische Eiweiße das Verdauungssystem von Tieren hemmen bzw. stören. Zum Abbau dieser unerwünschten Trypsininhibitioren im Saatgut ist eine Temperatur von ca. 80 °C bis 100 °C nötig. Weiterhin wird durch diese Temperatur Stärke im Saatgut aufgeschlossen. Jedoch wird bereits ab ca. 100 °C die Verdaulichkeit von gewünschten Proteinen negativ beeinflusst und zusätzlich erwünschtes Eiweiß abgebaut. Somit gehen bei zu hoher Temperatur wertvolle Inhaltsstoffe im Futtermittel verloren. Daher ist ein gleichmäßiges und im Hinblick auf die Temperatur genau zu steuerndes Erhitzen des Saatguts notwendig, um die bestmögliche Futtermittelqualität zu erreichen.

Durch eine, mit dem zum Abbau von Trypsininhibitoren bereits erhitzten Saatguts, durchgeführte Pressung kann das Saatgut besser entölt werden als bei einer Kaltpressung. Somit wird nach der Pressung ein fettreduzierter Presskuchen erhalten, der gut als universell einsetzbares Eiweißfuttermittel mit geringem Fettgehalt, beispielsweise als Futtermittel für Geflügel, Schweine und Rinder verwendbar ist.

Die bekannten Toaster nach dem Stand der Technik sind in erste Linie auf hohen Durchsatz optimiert. Daher arbeiten die Toaster mit sehr hohen Temperaturen. Die sogenannten "Großtoaster" arbeiten beispielsweise mit Temperaturen von 250°C und weit mehr, zum Teil sogar mit offenen Flammen, um einen maximalen Durchsatz zu erzielen. Jedoch stellen dadurch die erzielbare Futterqualität, die Energieeffizienz, der Energieaufwand und der technische Aufwand bis jetzt noch nicht optimal gelöste Probleme dar.

Beispielsweise ist bei sogenannten Trommeltoastern ist ein thermisches Verfahren bekannt, bei dem die Sojabohnen bei ca. 300°C, über eine direkte Gasflamme, oder bei ca. 900°C, durch indirekte Infrarotstrahlung, in einer Trommel geröstet werden. Dabei erhitzen sich die Sojabohnen schon in einer Zeit unter 40 Sekunden auf ca. 110 - 115 °C ("High-Temperature-Short-Time-(HTST)" Prinzip). Jedoch ist dadurch die Energieeffizienz gering und verwendeten Temperaturen und der technische Aufwand hoch. Derartige Trommeltoaster werden u.a. von den Herstellern Cimbria, Roastech, Circle Energy und Mecmar angeboten.

Weiterhin sind sogenannte Dämpfanlagen bekannt. Die Dämpfanlagen basieren auf einem hydrothermischen Verfahren, wobei die Sojabohnen mit Wasserdampf bei ca. 103°C gemischt und anschließend über längere Zeit für ca. 40 Minuten in einen Thermoreaktor der Hitze ausgesetzt werden. Anschließend werden die Sojabohnen in einem Wirbelstromtrockner flockiert und getrocknet. Dieses Verfahren ist jedoch sehr zeitaufwendig, kostenaufwendig und erfordert einen hohen baulichen Aufwand. Derartige Dämpfanlagen werden u.a. von dem Hersteller Steckl & Schrader angeboten.

Weiterhin sind aus dem Stand der Technik sogenannte Extruder oder Expander bekannt, welche auf einem druckthermische Verfahren basieren. Bei diesem Verfahren werden die Sojabohnen entölt und die geschroteten Sojabohnen werden mit Wasserdampf bei ca. 102 °C für ca. 10 min. lang gedämpft und in einen Ringspalt-Expander gegeben. Jedoch sind bei einem solchen Verfahren aufgrund des Extruders die Verschleißkosten sehr hoch. Solche Extruder werden u.a. von den Herstellern Farmet, Eurovisio, Almex und Amandus-Kahl angeboten.

Desweiteren sind auch Mikrowellenverfahren und Schneckentoaster zum Erhitzen von Sojabohnen bekannt. Nachteilig bei Mikrowellenverfahren ist, dass die Eiweiße durch die Mikrowellen beeinträchtigt werden können und die Sicherheit für das Betreiberpersonal schwierig zu gewährleisten ist. Bei Schneckentoastern ist der hohe Verschleiß der Anlagen bedenklich, sowie die Baugröße der Anlage bezogen auf den Durchsatz nachteilig. Solche Anlagen werden u.a. von den Herstellern Florapower, Dilts & Wetzel und Kernkraft bekannt.

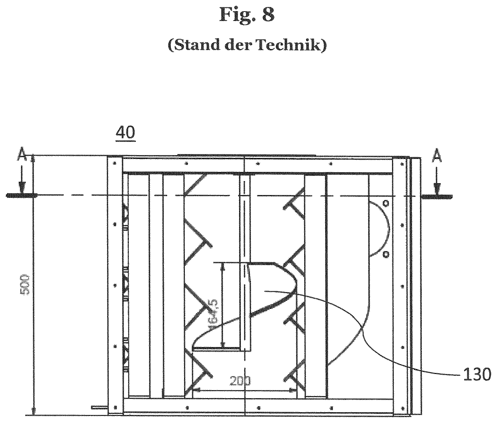

Neben den genannten "Großtoastern" sind auch Toaster für kleinere Anlagen bekannt. Allerdings erfordern diese Toaster meist einen mechanischen Mischer (aktiv oder passiv) zum Mischen der Sojabohnen in der Röstzone. Aufgrund der Mischer ist jedoch keine homogene Verteilung der Temperatur in der Röstzone möglich. Weiterhin muss der verwendete Luftstrom einen langen Weg durch die Sojabohnen zurücklegen und der Toaster ist sehr abhängig von der Massestromverteilung der Bohnen. Derartige Toaster sind weiterhin auch anfällig für schlecht gereinigtes Saatgut und verschmutzen schnell an der Ausblasseite. Ein solcher Toaster mit einem Mischer in der Röstzone ist in Fig. 8 dargestellt.

Aus der Druckschrift DE 30 28 636 A1 ist ein Verfahren und eine Vorrichtung zum Trocknen von Körnerfrüchten bekannt, die einen Dächerschachttrockner verwenden. Die Druckschrift US 3,595,668 A beschreibt ein Verfahren und eine Vorrichtung zum kontinuierlichen Rösten von Kaffeebohnen. Eine weitere Vorrichtung zum Wärmebehandeln von partikelförmigen Festkörpern, insbesondere zum kontinuierlichen Rösten von Kaffeebohnen ist aus der Druckschrift US 3,724,090 bekannt. Hierbei wird ein Kaffeebohnen-Bett in einem Reaktor durch ein aufwärts strömendes Fluid umgewälzt. Die Druckschrift US 3,189,460 beschreibt eine weitere Vorrichtung zum Rösten von Kaffee, die entweder in kontinuierlichen oder diskontinuierlichen Röstverfahren verwendet werden kann. Hierbei werden die Kaffeebohnen in einer Röstzone schnell umgewälzt, so dass jede Kaffeebohne "individuell" geröstet wird und dabei im Wesentlichen keinen Kontakt mit den Oberflächen der Vorrichtung oder anderen Kaffeebohnen hat.

Die vorliegende Erfindung stellt sich daher der Aufgabe, einen Toaster und ein Verfahren zum Toasten von Saatgut bereitzustellen, welcher bzw. welches niedrigere und gleichmäßigere Temperaturen im Toastbereich ermöglicht sowie ein schonenderes, skalierbareres, kostengünstigeres, wartungsfreundlicheres und energieeffizienteres Toasten von Saatgut ermöglicht.

### 3. Zusammenfassung der Erfindung

Die oben genannte Aufgabe wird gelöst durch einen Toaster zum Toasten von Saatgut, insbesondere Sojabohnen gemäß Anspruch 1 sowie durch ein Verfahren zum Toasten von Saatgut, insbesondere Sojabohnen gemäß Anspruch 13.

Insbesondere wird die oben genannte Aufgabe gelöst durch einen Toaster zum Toasten von Saatgut, insbesondere Sojabohnen, aufweisend ein Toastgehäuse mit einem Toastbereich, der von oben nach unten mit Saatgut durchströmt werden kann, und mindestens einen im Toastgehäuse angeordneten und sich in den Toastbereich erstreckenden, langgestreckten Lufteintrittskanal, mindestens einen im Toastgehäuse angeordneten und sich aus den Toastbereich heraus erstreckenden, langestreckten Luftaustrittskanal, wobei sich der genannte mindestens eine Lufteintrittskanal und der genannte mindestens eine Luftaustrittskanal sich jeweils in den Toastbereich hinein derart öffnen, dass ein erhitzter in das Toastgehäuse eintretender Luftstrom aus dem Lufteintrittskanal in den Toastbereich austreten und durch das zu toastende Saatgut hindurch zum Luftaustrittskanal strömen kann, um aus diesem aus dem Toastgehäuse auszutreten.

Der erfindungsgemäße Toaster weist einen Toastbereich auf, durch den mittels spezieller Kanäle ein erhitzter Luftstrom geleitet wird, wodurch der Toastbereich mit dem darin befindlichen Saatgut gleichmäßig durchströmt wird. Zum optimalen Leiten des Luftstroms sind im Toastbereich zwei verschiedene Kanäle in Gruppen angeordnet, nämlich Lufteintrittskanäle und Luftaustrittskanäle. Diese Lufteintrittskanäle und Luftaustrittskanäle erstrecken sich bevorzugt waagerecht bzw. horizontal durch den Toastbereich. Erfindungsgemäß verlässt der erhitzte Luftstrom die Luftöffnungen der Lufteintrittskanäle, um durch Konvektion durch das zu röstende Saatgut hindurch zu den Luftöffnungen der Luftaustrittskanäle zu strömen. Indem dann das Saatgut, von oben nach unten den gesamten Toastbereich durchläuft, wird das Saatgut durch den von den Kanälen aus- und eintretenden Luftstrom gleichmäßig und schonend erhitzt.

Dies ist besonders vorteilhaft, da der Toastbereich vollständig mit Saatgut gefüllt werden kann und somit ein sehr geringer Platzbedarf des Toasters notwendig ist, beispielsweise ca. 1 m³ für einen Toaster inklusive Wärmeerzeugung, Wärmerückgewinnung und Gebläse, der einen Durchsatz von 100 kg/h aufweist. Die verhältnismäßig große Menge von Saatgut im Toastbereich ergibt eine relativ lange Verweilzeit des Saatguts im Toastbereich. Während der Verweilzeit erfolgt mit der vorliegenden Erfindung ein schonendes und gleichmäßiges Toasten des Saatguts bei möglichst geringeren Temperaturen.

Auf der einen Seite können somit die schädlichen Trypsininhibitoren abgebaut werden, da hierzu eine Temperatur von mindestens ca. 80°C im Saatgut notwendig ist. Auf der anderen Seite können die wertvollen Inhaltsstoffe des Saatguts, die für die Qualität des Futtermittels entscheidend sind, und die jedoch bei Temperaturen über ca. 100 °C abgebaut werden, erhalten bleiben.

Des Weiteren verbraucht der Toaster durch die niedrigen Temperaturen und durch die Ausgestaltung des Toastbereichs mit Kanälen, weniger Energie als der Stand der Technik. Der Toaster benötigt zudem keine zusätzlichen Komponenten zum Durchmischen des Saatguts. Das Saatgut wird allein durch den erhitzten Luftstrom und die Kanäle im Toastbereich gleichmäßig erhitzt.

Weiterhin können die einzelnen Kanäle problemlos auf schnelle und einfache Art und Weise gereinigt werden. Dadurch werden der Wartungsaufwand und die zugehörigen Kosten reduziert.

Bevorzugt sind die sich in den Toastbereich erstreckenden Lufteintritts- und - Austrittkanäle horizontal angeordnet. Bevorzugt ist weiterhin eine Vielzahl von Kanälen vorgesehen, die jeweils nebeneinander beabstandet angeordnet sind. In einer weiteren bevorzugten Ausführungsform sind die Lufteintritts- und -Austrittkanäle in jeweils mindestens einer Reihe angeordnet. Weiterhin ist einer weiteren Ausführungsform bevorzugt, dass die Reihe der genannten Lufteintrittskanäle versetzt zu der Reihe der genannten Luftaustrittskanäle angeordnet ist.

In einer Ausführungsform können mehrere Lufteintrittskanäle jeweils horizontal nebeneinander und in bestimmten Abständen angeordnet sein. Weiterhin können Luftaustrittskanäle in einer separaten horizontalen Reihe nebeneinander und in bestimmten Abständen angeordnet sein. Dabei ist die Reihe von Lufteintrittskanälen im Toastbereich bevorzugt oberhalb oder unterhalb der Reihe von Luftaustrittskanälen angeordnet. Bevorzugt können die zwei unterschiedlichen Reihen von Lufteintrittskanälen und Luftaustrittskanälen versetzt zueinander angeordnet sein. In anderen Worten ist in dieser Ausführungsform horizontal zwischen zweien der Lufteintrittskanäle oberhalb oder unterhalb ein entsprechender Luftaustrittskanal angeordnet. Umgekehrt ist horizontal zwischen zweien der Luftaustrittskanäle oberhalb oder unterhalb ein Lufteintrittskanal aus der Reihe von Lufteintrittskanäle angeordnet.

Bevorzugt laufen die Lufteintrittskanäle und die Luftaustrittskanäle, jedenfalls im Toastbereich, jeweils nach oben spitz oder stumpf zu, oder sind oben abgerundet ausgebildet, und es befindet sich jeweils an ihrer Unterseite mindestens eine Luftöffnung. Die einzelnen Kanäle, nämlich die Lufteintrittskanäle sowie Luftaustrittskanäle, sind bevorzugt gleichermaßen ausgestaltet. Ein einzelner Kanal weist bevorzugt eine "dachförmige" Form auf, wobei die Oberseite des Kanals spitz zulaufend ausgebildet ist. Alternativ können die Kanäle auch andere Formen aufweisen, zum Beispiel an der Oberseite abgerundet. Die Unterseite weist jeweils eine oder mehrere Luftöffnungen auf oder ist vollständig offen.

Bevorzugt tritt der erhitzte Luftstrom aus der genannten Luftöffnung an der Unterseite des Lufteintrittskanals aus und nach Durchströmen des zu toastenden Saatguts in die genannte Luftöffnung an der Unterseite des Luftaustrittskanals ein, um dann das Toastgehäuse zu verlassen. Die Luftöffnungen an den Unterseiten der Kanäle ermöglichen einen optimalen, kurzen Luftweg durch das zu durchströmende Saatgut. Hierbei wird der Luftstrom zwischen den Luftöffnungen der Kanäle gleichmäßig durch das Saatgut geleitet.

Erfindungsgemäß weist der Toaster weiterhin ein Gebläse zum Erzeugen des Luftstroms auf. Das Gebläse kann bevorzugt durch einen Elektromotor angetrieben sein.

Erfindungsgemäß weist der Toaster einen Wärmeerzeuger zum Erhitzen des Luftstroms auf, wobei der Wärmeerzeuger elektrische Heizstäbe, einen Ölbrenner, einen Pflanzenölbrenner, einen Gasbrenner, einen Wasser/Luft-Wärmetauscher, einen Abgaswärmetauscher oder eine Wärmepumpe umfasst. Aufgrund der möglichen niedrigen Temperaturen ist der Toaster hinsichtlich der Art der Wärmeerzeugung flexibel. Als besonders vorteilhaft hat sich, aufgrund des niedrigen Energiebedarfs bei einem Toaster mit einem beispielhaften Durchsatz von einer 100 kg/h, eine elektrische Heizung herausgestellt, mit der die Lufttemperatur sehr genau geregelt werden kann und die bei dem geringen Energiebedarf den geringsten Aufwand darstellt. Beispielsweise wird kein Kamin oder Brennmaterialraum benötigt. Bei der Verwendung eines Ölbrenners, eines Pflanzenölbrenners oder eines Gasbrenners wird der Luftstrom bevorzugt nicht direkt mit einer Flamme erhitzt, sondern über einen Abgaswärmetauscher.

Bevorzugt beträgt die Lufttemperatur im Toastbereich gemittelt bis zu 200 °C und / oder die Saattemperatur im Toastbereich von 90 °C bis zu 130 °C. Dadurch wird ein Temperaturbereich geschaffen, bei dem schädliche Inhaltsstoffe (z.B. Trypsininhibtoren) des Saatguts abgebaut werden, wertvolle Eiweiße erhalten bleiben und ein Aufschluss von Stärke erfolgt. Zum Abbau von Trypsininhibtoren ist eine Mindesttemperatur von ca. 80 °C notwendig. Der Toaster erzeugt während des Toastens bevorzugt eine Saattemperatur von ca. 90°C bis 130°C, die über der Mindesttemperatur zum Abbau von Trypsininhibtoren liegt. Allerdings überschreitet die Saattemperatur, im Gegensatz zu bekannten "Großtoastern", bei einer Saattemperatur von ca. 90°C bis 130°C nicht wesentlich die gewünschte Temperatur von ca. 100°C, ab der wichtige Inhaltsstoffe (z.B. Eiweiße) abgebaut werden.

Bevorzugt weist der Toaster weiterhin einen Zyklon zur Reinigung des Luftstroms auf, wobei der Zyklon bevorzugt vor dem Wärmerzeuger angeordnet ist. Durch den bevorzugt nach dem Toastbereich angeordneten Zyklon wird der Luftstrom von Verunreinigungen oder Verschmutzungen gereinigt. Damit erhöht sich die Futtermittelqualität und der Zyklon schützt den Wärmeerzeuger vor einer Staubexplosion und einen Wärmetauscher vor Verschmutzung.

Bevorzugt weist der Toaster weiterhin eine Dosiereinheit auf, beispielsweise eine Schleuse zum Dosieren des Massestroms des Saatguts durch den Toastbereich. Die Dosiereinheit bestimmt den durch den Toastbereich strömenden Massestrom und damit die Verweildauer des Saatguts im Toastbereich. Die Dosierung kann aber auch durch eine dem Toaster nachgelagerte Dosierschnecke oder durch eine Ölpresse erfolgen.

Bevorzugt ist die Schleuse eine Mehrfachschleuse, die eine flächig gleichmäßige Entnahme des Saatguts aus dem Toastbereich sicherstellt. Eine Mehrfachschleuse hat sich zur genauen Dosierung der Durchlaufgeschwindigkeit des Saatgutes durch den Toastbereich bewährt.

Bevorzugt weist der Toaster weiterhin einen Luft/Luft-Wärmetauscher für eine verstärkte Trocknung des Saatguts auf. Der Wärmetauscher kann beispielsweise als Kreuzstromwärmetauscher oder als Rotationswärmetauscher ausgeführt sein. Der Einsatz eines Wärmetauschers ermöglicht ein Trockentoastverfahren mit trockener Frischluft. Das Saatgut gibt während des Toastens Feuchtigkeit ab. Ohne Wärmetauscher reichert sich die Feuchtigkeit im Luftstrom an, bis sich ein Gleichgewicht einstellt. Auf diese Weise wird das Saatgut in einem Feuchtverfahren getoastet.

Mittels eines Wärmetauschers wird jedoch die feuchte Abluft nach dem Toastbereich an die Umwelt abgegeben und gleichzeitig Frischluft aufgeheizt, die dem Verfahren zugeführt wird. Damit wird zum Toasten trockene Luft verwendet, wodurch die Sojabohnen stärker getrocknet werden.

Im Gegensatz zum trockenen Verfahren hat das erfindungsgemäße feuchte Verfahren den Vorteil, dass die Lufttemperatur über den Durchblasbereich im Toastbereich stabiler ist und somit der Toasteffekt verbessert werden kann. Der Wärmetauscher kann nach individuellen Bedürfnissen und Anforderungen optional verwendet werden.

Bevorzugt weist der Toaster weiterhin einen luftdurchströmten Vorheizer zum Vorwärmen des Saatguts vor dem Toasten und / oder einen luftdurchströmten Nachkühler zum Kühlen des Saatguts nach dem Toasten auf. Durch den vor dem Toastbereich angeordneten Vorheizer kann die Gleichmäßigkeit der Temperatur des Saatguts erhöht werden und die Energiekosten optimiert werden. Durch den nach dem Toastbereich angeordneten Nachkühler wird zusätzlich eine weitere Wärmerückgewinnung ermöglicht und es kann die Temperatur des Saatguts optimal auf eine optionale dem Toaster nachgelagerte Ölpresse eingestellt werden.

Die oben genannte Aufgabe wird auch gelöst durch ein Verfahren zum Toasten von Saatgut, insbesondere Sojabohnen, wobei das Verfahren die folgenden Schritte aufweist:
a. Durchströmen eines Toastgehäuses mit einem Toastbereich von oben nach unten mit Saatgut, gesteuert durch eine dem Toastbereich nachgelagerte Dosiereinheit;
b. Anordnen mindestens eines sich in den Toastbereich erstreckenden, langgestreckten Lufteintrittskanals in den Toastbereich;
c. Anordnen mindestens eines sich in den Toastbereich hinein erstreckenden, langgestreckten Luftaustrittskanals in den Toastbereich;
d. Eintreten eines erhitzten Luftstroms in den Toastbereich aus dem Lufteintrittskanal;
e. Durchströmen und Erwärmen des zu toastenden Saatguts mit dem Luftstrom; und
f. Austreten des Luftstroms aus dem Toastbereich in den Luftaustrittskanal hinein, um dann aus dem Toastgehäuse auszutreten.
g. Führen des Luftstroms in einem Luftkreislauf

Durch ein solches Verfahren zum Toasten von Saatgut, insbesondere Sojabohnen, ergeben sich ebenfalls die oben beschriebenen Vorteile eines gleichmäßigeren Toastens von Saatgut bei niedrigen Temperaturen und geringem Energieeinsatz. Insbesondere wird zum einen der Anteil an Trypsininhibitoren zuverlässig und auf schonende und energieeffiziente Art und Weise reduziert, wobei andere wichtige Inhaltsstoffe, wie Eiweiße in hoher Menge erhalten bleiben. Das Verfahren ermöglicht dadurch die Herstellung von Futtermitteln mit hoher Qualität.

Bevorzugt umfasst das Verfahren den weiteren Schritt: h.

Leiten des Luftstroms in einen Zyklon zur Reinigung des Luftstroms;
Bevorzugt ist die Dosiereinheit eine Komponente des Toasters oder eine dem Toaster nachgelagerte, externe Dosiereinheit, beispielsweise eine dem Toaster nachgelagerte Dosierschnecke oder eine Ölpresse.

### 4. Kurze Beschreibung der Zeichnungen

Im Folgenden werden bevorzugte Ausführungsformen der Erfindung anhand der begleitenden Zeichnungen beschrieben, in denen zeigt:
- Fig. 1:: eine Draufsicht einer bevorzugten Ausführungsform eines erfindungsgemäßen Toasters zum Toasten von Saatgut ohne Wärmetauscher;
- Fig. 2:: eine Draufsicht einer weiteren Ausführungsform eines erfindungsgemäßen Toasters zum Toasten von Saatgut mit Wärmetauscher;
- Fig. 3:: eine Seitenansicht der Ausführungsformen des erfindungsgemäßen Toasters von Fig. 1 oder Fig. 2;
- Fig. 4:: eine geschnittene schematische Draufsicht der Ausführungsform des erfindungsgemäßen Toasters gemäß Fig. 1;
- Fig. 5:: eine geschnittene schematische Teilansicht einer weiteren Ausführungsform des erfindungsgemäßen Toasters;
- Fig. 6A-C:: Schnittansichten unterschiedlicher Querschnittsformen der Lufteintrittskanäle und Luftaustrittskanäle eines Toasters;
- Fig. 7:: eine schematische geschnittene Ansicht der Luftzufuhr zu den Lufteintrittskanälen und Luftabfuhr aus den Luftaustrittskanälen eines Toasters; und
- Fig. 8:: eine geschnittene Seitenansicht eines Toastbereichs eines Toasters nach den Stand der Technik mit einem Mischer.

### 5. Beschreibung der bevorzugten Ausführungsformen

Im Folgenden werden bevorzugte Ausführungsformen der vorliegenden Erfindung in Bezug auf die begleitenden Figuren beschrieben. Merkmale einzelner Ausführungsformen können auch mit jeden anderen Ausführungsformen kombiniert werden, obwohl solche Kombinationen im Einzelfall nicht im Detail dargestellt sind.

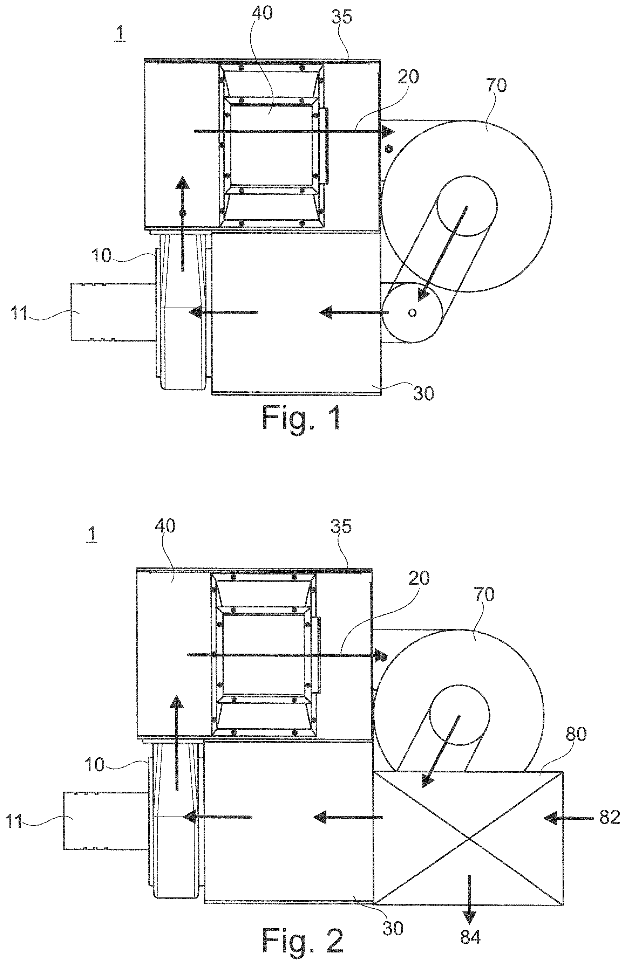

Fig. 1 zeigt eine Draufsicht eines erfindungsgemäßen Toasters 1 zum Toasten von Saatgut, insbesondere Sojabohnen. Der Toaster ist anstelle von Sojabohnen auch dazu geeignet ähnliches Saatgut, wie beispielsweise Pferdebohnen oder Getreide zu toasten.

Der Toaster 1 umfasst ein Gebläse 10, einen Toastbereich 40, einen Zyklon 70 und einen Wärmerzeuger 30.

Das Gebläse 10 wird durch einen Elektromotor 11 angetrieben. Im Betrieb erzeugt das Gebläse 10 einen Luftstrom 20, der in den Toastbereich 40 eingeblasen wird. Der Luftstrom bzw. Luftkreislauf 20 ist durch die dargestellten Pfeile angedeutet. Der Toastbereich wird von einem Gehäuse 35 begrenzt und ist bevorzugt vollständig mit Saatgut gefüllt. Der Luftstrom 20 durchströmt den Toastbereich 40 und erhitzt dabei das Saatgut. Nach dem Erhitzen tritt der Luftstrom 20 aus dem Toastbereich 40 aus und wird in den Zyklon 70 geleitet, der den Luftstrom 20 von Verunreinigungen reinigt. Aus dem Zyklon 70 wird der gereinigte Luftstrom 20 in den Wärmeerzeuger 30 geleitet, der den Luftstrom auf eine Betriebstemperatur erhitzt. Der erhitzte Luftstrom 20 tritt aus dem Wärmeerzeuger 30 aus und in das Gebläse 10 ein, wodurch ein Luftkreislauft entsteht. Bei dieser Ausführungsform des Toasters 1 reichert sich die Feuchtigkeit, die das Saatgut abgibt, im Luftstrom an. Dieses Toastverfahren wird daher als "Feuchttoasten" bezeichnet.

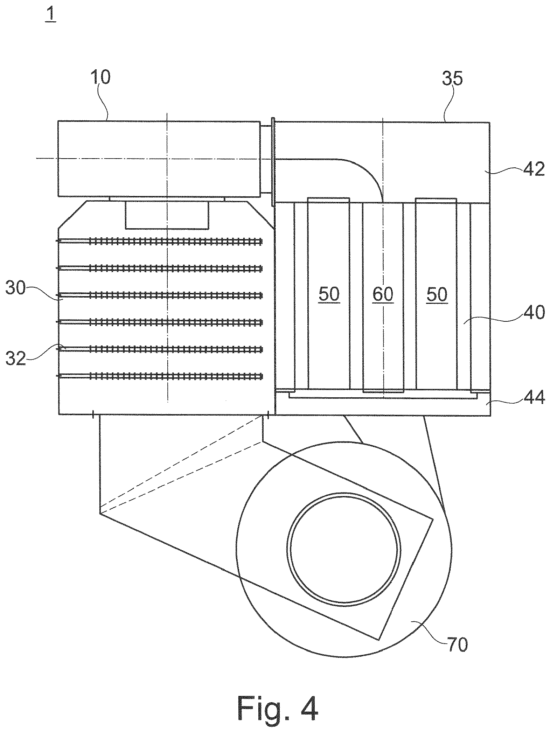

Der Wärmeerzeuger 30 erhitzt den Luftstrom 20 auf seine Betriebstemperatur bis ca. 200°C. Bevorzugt umfasst der Wärmeerzeuger 30 elektrische Heizstäbe 32, wie sie in Fig. 4 ersichtlich sind, da das Gesamtverfahren nur einen, verglichen mit dem Stand der Technik, geringen Energiebedarf benötigt. Alternative Wärmequellen sind beispielsweise Heißwasser, Thermoöl, Holz, Pellet, Gas, Heizöl, das Abgas eines Blockheizkraftwerkes oder eine Wärmepumpe. Eine Wärmepumpe kann anstelle eines elektrischen Antriebs auch mechanisch beispielsweise durch Wärme-KraftMaschine angetrieben werden.

Der Luftstrom 20 wird vom Toastbereich 40 entweder direkt an den Wärmeerzeuger 30 geleitet oder an einen Zyklon 70, der den Luftstrom 20 von Verunreinigungen reinigt. Der Zyklon 70 basiert auf dem Prinzip der Fliehkraft, wobei sich im Luftstrom 20 enthaltenen Verunreinigungen wie Staub, Sand und ähnliche Verschmutzungen mechanisch von der durchströmenden Luft trennen. Somit wird der Toaster 1 insgesamt vor Verunreinigungen geschützt und das durchströmte Saatgut wird gereinigt.

Wie in Fig. 2 dargestellt, kann der Toaster 1 optional einen Luft/Luft-Wärmetauscher 80, beispielsweise einen Luft/Luft-Kreuzstromwärmetauscher oder einen Luft/Luft-Rotationswärmetauscher, aufweisen. Der Luft/Luft-Wärmetauscher 80 nimmt Frischluft 82 aus der Umgebung auf, welche in den Luftkreislauf 20 gelangt, und gibt feuchte Abluft 84 an die Umgebung ab. Hierbei wird die Wärme der Abluft 84 zum großen Teil an die Frischluft 82 übertragen und somit Energie eingespart. Wenn zum Toasten Frischluft 82 verwendet wird, wird dem Saatgut während des Toastens fortlaufend Feuchtigkeit entzogen. Diese wird mit der Abluft 84 an die Umgebung abgegeben. Somit kann mit Hilfe des Luft/Luft-Wärmetauschers 80 das Saatgut in einem Trockentoastverfahren getoastet werden.

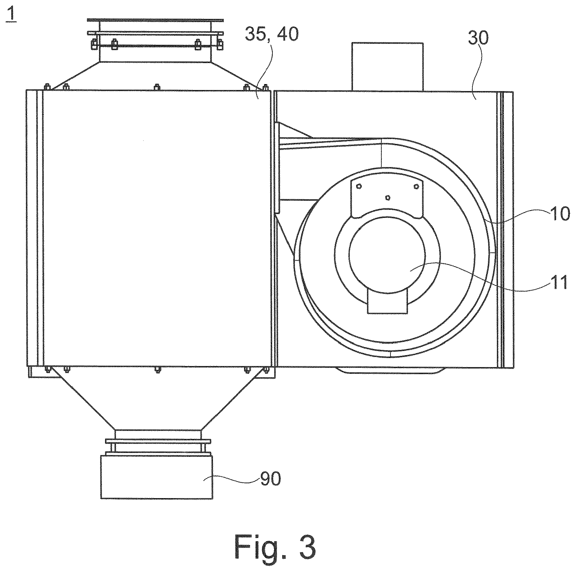

Fig. 3 zeigt den Toaster 1 der Ausführungsformen der Figuren 1 und 2 in einer Seitenansicht, bei der im Detail das Gebläse 10 und eine Seitenwand des Toastbereichs 40 ersichtlich ist.

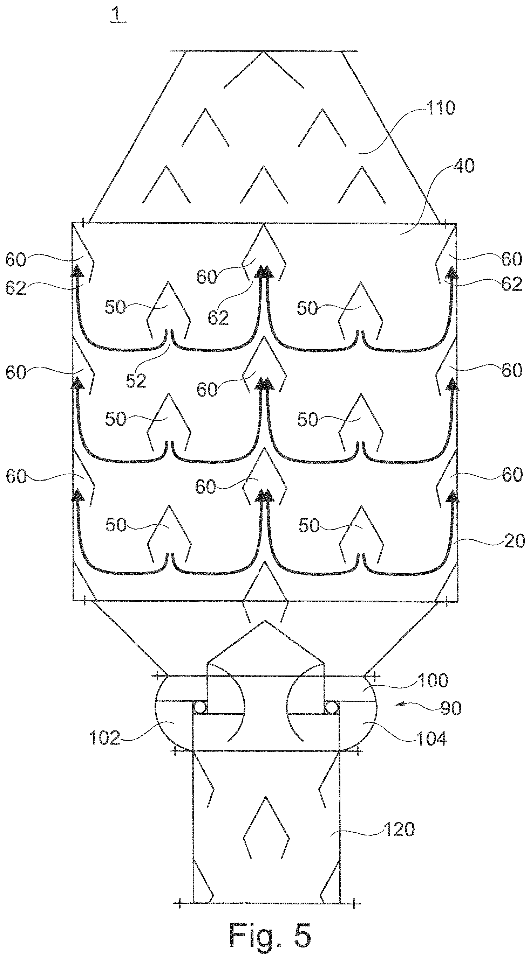

Bevorzugt weist der Toaster 1 eine Dosiereinheit 90 auf, die am Auslass des Toastbereichs 40 angeordnet ist. Die Dosiereinheit 90 bestimmt den Durchsatz des sich aufgrund der Schwerkraft durch den Toastbereich strömenden Saatguts. Mittels der Dosiereinheit kann damit die Verweildauer des Saatguts im Toastbereich 40 geregelt werden, die notwendig ist, um die Sojabohnen auf die gewünschte Temperatur zu erhitzen. Die Dosiereinheit 90 ist genauer in Fig. 5 dargestellt. Die Dosiereinheit 90 umfasst bevorzugt eine Doppelschleuse 100, die zwei elektrisch angetriebene Zellräder 102, 104 aufweist. Durch die Drehgeschwindigkeit der Zellräder 102, 104 kann der Durchsatz des Saatguts durch den Toastbereich 40 genau geregelt werden.

Die Dosiereinheit 90, 100 kann eine Komponente des Toasters 1 selbst sein, oder eine dem Toaster 1 nachgelagerte externe Dosiereinheit.

Fig. 4 stellt eine geschnittene schematische Draufsicht des Toasters 1 dar. Das Gebläse 10 ist mit einem Verteilbereich 42 des Toastbereichs 40 verbunden, um erhitzte Luft in diesen einzuleiten. Der Verteilbereich 42 verteilt den Luftstrom 20 auf eine Anzahl von Lufteintrittskanälen 50, die langgestreckt ausgebildet sind und sich in den Toastbereich 40 hinein erstrecken. Wie in Fig. 4 ersichtlich, erstrecken sich die Lufteintrittskanäle 50 durch den gesamten Toastbereich 40 hindurch. Durch die Lufteintrittskanäle 50 wird Luft in den Toastbereich 40 eingeblasen, um das Saatgut gleichmäßig zu durchströmen und dieses zu erhitzen. Weiterhin weist der Toastbereich 40 langestreckte Luftaustrittskanäle 60 auf, die sich ebenfalls in den Toastbereich 40 hinein erstrecken. Wie in Fig. 4 ersichtlich, erstrecken sich die Luftaustrittskanäle 60 durch den gesamten Toastbereich 40 hindurch. Durch die Luftaustrittskanäle 60 wird die Luft wieder aus dem Toastbereich 40 in einen

Sammelbereich 44 des Gehäuses 35 abgeführt. Von dort gelangt die Luft wiederum in den Zyklon 70 zur Reinigung.

Fig. 5 zeigt eine geschnittene Seitenansicht des Toasters 1, insbesondere eine Seitenansicht des Toastbereichs 40. Das Saatgut durchströmt aufgrund der Schwerkraft und mittels der Dosiereinheit 90 dosiert, den Toastbereich 40 von oben nach unten. Das Saatgut wird dabei im vom der Luft durchströmten Toastbereich 40 durch den erhitzten Luftstrom 20 erhitzt.

Wie dargestellt, weist der Toastbereich 40 Lufteintrittskanäle 50 und Luftaustrittskanäle 60 auf. Jeder Kanal 50, 60 weist an der Unterseite mindestens eine Luftöffnung 52, 62 auf, aus der Luft in den Kanal eintreten oder aus dem Kanal austreten kann. Die Luftöffnungen 52, 62 können auch durch vollständig offene Unterseiten der Kanäle 50, 60 gebildet werden.

Wie aus dem mit Pfeilen angedeutete Luftstrom 20 ersichtlich, tritt die heiße Luft an der Unterseite der Lufteintrittskanäle 50 aus und durchströmt das zu toastende Saatgut gleichmäßig. Dann tritt die Luft in die Luftöffnungen an der Unterseite des Luftaustrittskanals 60 ein, um über den Sammelbereich 44, das Toastgehäuse 35 zu verlassen.

Wie aus Fig. 5 ersichtlich, sind einige der Lufteintrittskanäle 50 und einige der Luftaustrittskanäle 60 in horizontalen Reihen angeordnet. Die Reihen von Lufteintrittskanälen 50 wechseln sich in vertikaler Richtung mit Reihen von Luftaustrittskanälen 60 ab. Weiterhin sind die Reihen von Lufteintrittskanälen 50 und Luftaustrittskanälen 60 horizontal versetzt zueinander angeordnet, so dass einerseits das den Toastbereich durchströmende Saatgut durchmischt wird und anderseits sich eine gleichmäßige Durchströmung des Toastbereichs 40 einstellt.

Der Toaster 1 umfasst neben dem Toastbereich 40 einen ebenfalls luftdurchströmten Vorheizer 110, um ein noch gleichmäßigeres Erhitzen des Saatguts zu ermöglichen. Nach dem Toastbereich 40 kann ein Nachkühler 120 nachgeschaltet werden, der zur weiteren Wärmerückgewinnung und zum Abkühlen des Saatguts dient. Der Nachkühler kann sich vor der Dosiereinheit 90,100 befinden.

Anstelle des Nachkühlers 120 kann vor oder nach der Dosiereinheit 90,100 eine Verweilzone (nicht dargestellt) vorhanden sein, in der das Saatgut ohne externe Wärmezufuhr und ohne Kühlung bei niedriger Temperatur nachtoastet. Die Verweilzone ist bevorzugt ein einfacher oben und unten offener Raum in dem das im Toastbereich 40 erhitzte Saatgut nachtoasten kann. Die Verweilzone kann zu diesem Zweck wärmegedämmt sein. Bevorzugt kann der Toaster 1 so gefahren werden, dass das Saatgut im Toastbereich 40 3 - 10 Minuten lang auf die erforderliche Temperatur erhitzt wird und danach in der Verweilzone 20 - 60 Minuten lang ohne Wärmezufuhr nachtoastet. Dadurch ergibt sich eine noch gleichmäßigere Temperaturverteilung im Saatgut. Die Folge ist eine bessere Pressbarkeit des Saatguts, insbesondere von Sojabohnen durch Nachreifung. Gleichzeitig kann die minimal benötigte Toasttemperatur verringert werden, was zu einer besseren Energieeffizienz und zu einer minimierten Temperaturbeeinflussung des Saatgutes führt.

Bei eher kleineren Anlagen bis ca. 500 kg/h Durchsatz kann, zur besseren Raumeffizienz, die Verweilzone sich unmittelbar an den Toastbereich 40 anschließen. Sie befindet sich dann vor der Dosiereinheit 90, 100 zwischen dem Toastbereich 40 und dem Nachkühler im Auslauftrichter.

Bei eher größeren Anlagen ab ca. 500 - 1000 kg/h oder mehr Durchsatz wird die Verweilzone nach der sich dem Toastbereich 40 unmittelbar anschließenden Dosiereinheit 90,100 angeordnet, um das erforderliche Volumen an erhitztem und teilgetoastetem Saatgut aufzunehmen. Dann dosiert die Dosiereinheit 90, 100 in einen Ruhe- oder Wartebehälter (nicht dargestellt), beispielsweise in ein Silo, der wiederum im Auslauf eine Nachkühlzone und eine weitere Dosiereinrichtung aufweisen kann. Durch die zweistufige Dosierung kann die Nachheizzeit dynamisch eingestellt werden. Die Dosiereinrichtung 90, 100 kann beispielsweise auch aus zwei geschlitzten Blechen bestehen, die zum Öffnen und Schließen gegeneinander verschoben werden.

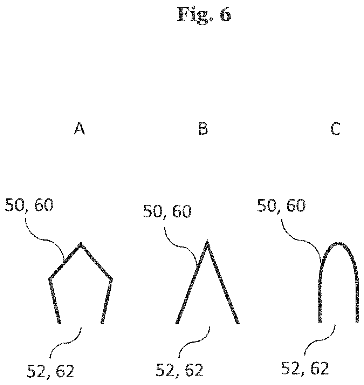

Die Figuren 6 A - C zeigen unterschiedliche Querschnittsformen eines einzelnen Lufteintrittskanals 50 oder Luftaustrittskanals 60. In Fig. 6A ist ein dachförmiger Kanal 50, 60 dargestellt, der unten offen ist und oben spitz zuläuft. In Fig. 6B ist ein unten offener Kanal 50, 60 dargestellt, der oben spitz zuläuft und im Querschnitt dreieckförmig ist. In Fig. 6C ein Kanal dargestellt, der unten offen ist und oben rund ausgebildet ist. Die Unterseite aller Kanäle weist bevorzugt eine oder mehrere Luftöffnungen 52, 62 auf, oder kann insgesamt offen ausgebildet sein. Die Kanäle 50, 60 werden von oben nach unten vom Saatgut überströmt, so dass in die unten angeordneten Lufteintrittsöffnungen 52, 62 nur wenig Saatgut eintritt.

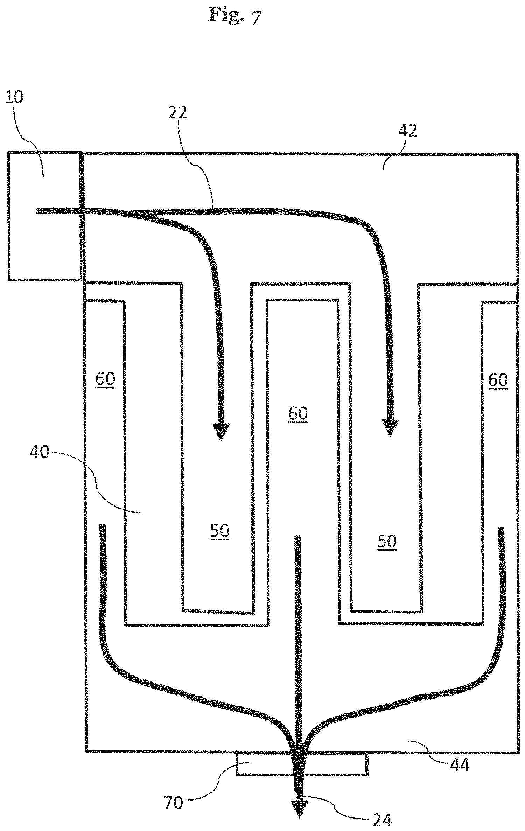

Die Fig. 7 stellt schematisch die Luftversorgung der einzelnen Lufteintrittskanäle 50 oder Luftaustrittskanäle 60 dar. Der zugeführte Luftstrom 22 wird von dem Verteilbereich 42 auf die daran angeschlossenen Lufteintrittskanäle 50 verteilt. Von diesen ausgehend durchströmt er das Saatgut im Toastbereich 40 und tritt in die Luftaustrittskanäle 60 ein. Diese leiten den abgeführten Luftstrom 24 zum Sammelbereich 44, wo er zusammengeführt und an den Zyklon 70 weitergeleitet wird.

Die Fig. 8 zeigt einen Toaster einer Kleinanlage aus dem Stand der Technik. Erhitzte Luft wird hierbei über die ganze Breite des Toastbereichs in das Saatgut eingeblasen. Beim Durchströmen des Toastbereichs wird das Saatgut mittels eines passiven Mischers gemischt. Daher ist der Luftweg durch den Toaster lang und somit unbestimmt. Dies bringt die Nachteile mit sich, dass die Erhitzung des Saatguts nicht genau genug und nicht homogen genug erfolgen kann. Weiterhin reagiert der Toaster aufgrund des Mischers sehr sensitiv auf Veränderungen des Massestromes, was ebenfalls zu einem inhomogenen Erhitzen des Saatguts führen kann.

Durch die oben beschriebene Ausgestaltung des Toasters 1 wird ein Verfahren zum Toasten von Saatgut, insbesondere Sojabohnen, ermöglicht, das die folgenden Schritte aufweist:
a. Durchströmen eines Toastgehäuses 35 mit einem Toastbereich 40 von oben nach unten mit Saatgut, gesteuert durch eine dem Toastbereich nachgelagerte Dosiereinheit 90, 100;
b. Anordnen mindestens eines sich in den Toastbereich 40 hinein erstreckenden, langgestreckten Lufteintrittskanals 50 in dem Toastbereich 40;
c. Anordnen mindestens eines sich in den Toastbereich hinein erstreckenden, langgestreckten Luftaustrittskanals 60 in dem Toastbereich 40;
d. Eintreten eines erhitzten Luftstroms 20 in den Toastbereich 40 aus dem Lufteintrittskanal 50;
e. Durchströmen und Erwärmen des zu toastenden Saatguts mit dem Luftstrom 20; und
f. Austreten des Luftstroms 20 aus dem Toastbereich 40 in den Luftaustrittskanal 60 hinein, um dann aus dem Toastgehäuse 35 auszutreten.
g. Führen des Luftstroms in einem Luftkreislauf

Durch dieses Verfahren wird das Saatgut sehr gleichmäßig und daher temperaturgenau erhitzt. Damit erhöht sich die Futtermittelqualität durch den gezielten Abbau von Trypsininhibitoren und den Erhalt wichtiger Inhaltsstoffe, wie Eiweiß. Zusätzlich ist das vorgestellte Verfahren durch die gute Wärmeübertragung und die niedrigen Temperaturen besonders energieeffizient.

In einer Ausführungsform umfasst das Verfahren den weiteren Schritt:
h. Leiten des Luftstroms in einen Zyklon 70 zur Reinigung des Luftstroms.

Damit arbeitet das Verfahren besonders energieeffizient.

Weitere Ausführungsformen ergeben sich aus den Merkmalen der Ansprüche.

### Bezugszeichenliste:

- 1: Toaster
- 10: Gebläse
- 11: Elektromotor
- 20: Luftstrom
- 22: zugeführter Luftstrom
- 24: abgeführter Luftstrom
- 30: Wärmeerzeuger
- 32: elektrische Heizstäbe
- 35: Toastgehäuse
- 40: Toastbereich
- 42: Verteilbereich
- 44: Sammelbereich
- 50: Lufteintrittskanal
- 52: Luftöffnung
- 60: Luftaustrittskanal
- 62: Luftöffnung
- 70: Zyklon
- 80: Wärmetauscher
- 82: Frischluft
- 84: Abluft
- 90: Dosiereinheit
- 100: Doppelschleuse
- 102: erstes Zellrad
- 104: zweites Zellrad
- 110: Vorheizer
- 120: Nachkühler
- 130: Mischer

## Patentansprüche

1. Toaster (1) zum Toasten von Saaten, insbesondere Sojabohnen, aufweisend:
a. ein Toastgehäuse (35) mit einem Toastbereich (40), der von oben nach unten mit Saat durchströmt werden kann;
b. ein Gebläse (10), das einen Luftstrom (20) erzeugt; und
c. einen Wärmeerzeuger (30), zum Erhitzen des Luftstroms (20);
d. mindestens einen im Toastgehäuse (35) angeordneten und sich in den Toastbereich (40) hinein erstreckenden, langgestreckten Lufteintrittskanal (50);
e. mindestens einen im Toastgehäuse (35) angeordneten und sich in den Toastbereich (40) hinein erstreckenden, langestreckten Luftaustrittskanal (60); wobei
f. sich der genannte mindestens eine Lufteintrittskanal (50) und der genannte mindestens eine Luftaustrittskanal (60) sich jeweils in den Toastbereich (40) hinein derart öffnen; dass
g. der erhitzte, in das Toastgehäuse (35) eintretende Luftstrom (20, 22) aus dem Lufteintrittskanal (50) in den Toastbereich (40) austreten und durch die zu toastende Saat hindurch zum Luftaustrittskanal (60) strömen kann, um aus diesem aus dem Toastgehäuse (35) auszutreten, wobei der Luftstrom (20) den Toastbereich (40) durchströmt und die Saat erhitzt; und wobei
h. der Luftstrom (20) in einem Luftkreislauf geführt wird und die Feuchtigkeit, die die Saat abgibt, sich im Luftstrom anreichern kann.

2. Toaster gemäß Anspruch 1, weiterhin aufweisend eine Dosiereinheit (90), zum Dosieren des Massestroms der Saat durch den Toastbereich (40).

3. Toaster gemäß Anspruch 2, wobei die Dosiereinheit (90) am Auslass des Toastbereichs (40) angeordnet ist.

4. Toaster gemäß Anspruch 3, wobei die Dosiereinheit (90) eine Schleuse (100) aufweist, die eine Mehrfachschleuse (102, 104) ist, um eine flächige Entnahme der Saat aus dem Toastbereich (40) zu gewährleiten.

5. Toaster gemäß einem der Ansprüche 1 bis 4, wobei der Toaster so eingerichtet ist, dass die Lufttemperatur im Toastbereich (40) gemittelt bis zu ca. 200 °C beträgt und / oder die Saattemperatur im Toastbereich (40) von 90 °C bis zu 130 °C beträgt.

6. Toaster gemäß einem der Ansprüche 1 bis 5, weiterhin aufweisend einen Zyklon (70) zur Reinigung des Luftstroms (20), wobei der Zyklon (70) bevorzugt vor dem Wärmeerzeuger (30) angeordnet ist.

7. Toaster gemäß Anspruch 1, wobei die genannten, sich in den Toastbereich (40) erstreckenden Lufteintritts- und -Austrittskanäle (50, 60) horizontal angeordnet sind.

8. Toaster gemäß einem Anspruch 1 bis 7, wobei eine Vielzahl von Lufteintritts-und -Austrittskanälen (50, 60) vorgesehen ist, die jeweils nebeneinander beabstandet angeordnet sind.

9. Toaster gemäß einem der Ansprüche 1 bis 8, wobei die genannten Lufteintrittskanäle (50) und die genannten Luftaustrittskanäle (60) jedenfalls im Toastbereich (40) jeweils nach oben spitz oder stumpf zulaufen, oder oben abgerundet ausgebildet sind, und sich jeweils an ihrer Unterseite mindestens eine Luftöffnung (52, 62) befindet.

10. Toaster gemäß Anspruch 9, wobei der erhitzte Luftstrom (20, 22) aus der genannten Luftöffnung (52) an der Unterseite des Lufteintrittskanals (50) austritt und nach Durchströmen der zu toastenden Saat in die genannte Luftöffnung (62) an der Unterseite des Luftaustrittskanals (60) eintritt, um so das Toastgehäuse (35) zu verlassen.

11. Toaster gemäß einem der Ansprüche 1 bis 10 wobei der Wärmeerzeuger (30) elektrische Heizstäbe, einen Ölbrenner, einen Pflanzenölbrenner, einen Gasbrenner, einen Wasser/Luft-Wärmetauscher, einen Abgaswärmetauscher oder eine Wärmepumpe umfasst.

12. Toaster gemäß einem der Ansprüche 1 bis 11, weiterhin aufweisend einen luftdurchströmten Vorheizer (110) zum Vorwärmen der Saat vor dem Toasten und / oder einen luftdurchströmten Nachkühler (120) zur Wärmerückgewinnung und zum Kühlen der Saat nach dem Toasten.

13. Verfahren zum Toasten von Saaten, insbesondere Sojabohnen, wobei das Verfahren die folgenden Schritte aufweist:
a. Durchströmen eines Toastgehäuses (35) mit einem Toastbereich (40) von oben nach unten mit Saat, gesteuert durch eine dem Toastbereich nachgelagerte Dosiereinheit;
b. Anordnen mindestens eines sich in den Toastbereich (40) hinein erstreckenden, langgestreckten Lufteintrittskanals (50) in den Toastbereich (40);
c. Anordnen mindestens eines sich in den Toastbereich (40) hinein erstreckenden, langgestreckten Luftaustrittskanals (60) in den Toastbereich (40);
d. Eintreten eines durch einen Wärmeerzeuger (30) in Form einer elektrischen Heizung erhitzten Luftstroms (30) aus dem Lufteintrittskanal (50) in den Toastbereich (40);
e. Durchströmen und Erwärmen der zu toastenden Saat mit dem Luftstrom (20);
f. Austreten des Luftstroms (20) aus dem Toastbereich (40) in den Luftaustrittskanal (60) hinein, um dann aus dem Toastgehäuse (35) auszutreten; und
g. Führen des Luftstroms (20) in einem Luftkreislauf, wobei die Feuchtigkeit, die die Saat abgibt, sich im Luftstrom anreichern kann.

14. Verfahren zum Toasten von Saaten gemäß Anspruch 13, wobei die Dosiereinheit (90, 100) eine Komponente des Toasters (1) ist oder wobei die Dosiereinheit (90, 100) eine einem Toaster (1) nachgelagerte, externe Dosiereinheit ist.

## Claims

1. Toaster (1) for toasting seeds, in particular soybeans, comprising:
a. a toasting housing (35) having a toasting region (40) through which seeds can flow from top to bottom;
b. a fan (10) which generates an air flow (20); and
c. a heat generator (30) for heating the air flow (20);
d. at least one elongated air inlet duct (50) arranged in the toasting housing (35) and extending into the toasting region (40);
e. at least one elongated air outlet duct (60) arranged in the toasting housing (35) and extending into the toasting region (40); wherein
f. said at least one air inlet duct (50) and said at least one air outlet duct (60) each open into the toasting region (40) such that
g. the heated air flow (20, 22) entering the toasting housing (35) can exit from the air inlet duct (50) into the toasting region (40) and flow through the seeds to be toasted to the air outlet duct (60) to exit therefrom from the toasting housing (35), wherein the air flow (20) flows through the toasting region (40) and heats the seeds; and wherein
h. the air flow (20) is guided in an air circuit and the moisture releasing the seeds can accumulate in the air flow.

2. Toaster according to claim 1, further comprising a dosing unit (90) for dosing the mass flow of the seeds through the toasting region (40).

3. Toaster according to claim 2, wherein the dosing unit (90) is arranged at the outlet of the toasting region (40).

4. Toaster according to claim 3, wherein the dosing unit (90) comprises a lock (100), which is a multiple lock (102, 104), in order to ensure a planar removal of the seeds from the toasting region (40).

5. Toaster according to any one of claims 1 to 4, wherein the toaster is configured such that the air temperature in the toasting region (40) is on average up to about 200°C and/or the seed temperature in the toasting region (40) is from 90°C to 130°C.

6. Toaster according to any one of claims 1 to 5, further comprising a cyclone (70) for cleaning the air flow (20), wherein the cyclone (70) is preferably arranged upstream of the heat generator (30).

7. Toaster according to claim 1, wherein said air inlet and outlet ducts (50, 60) extending into the toasting region (40) are arranged horizontally.

8. Toaster according to any one of claims 1 to 7, wherein a plurality of air inlet and outlet ducts (50, 60) is provided, which are each arranged spaced apart from one another.

9. Toaster according to any one of claims 1 to 8, wherein said air inlet ducts (50) and said air outlet ducts (60) in any case in the toasting region (40) each taper upwards or taper, or are rounded at the top, and at least one air opening (52, 62) is located in each case on their underside.

10. Toaster according to claim 9, wherein the heated air flow (20, 22) exits from said air opening (52) on the underside of the air inlet duct (50) and, after flowing through the seeds to be toasted, enters said air opening (62) on the underside of the air outlet duct (60) to thus exit the toasting housing (35).

11. Toaster according to any one of claims 1 to 10, wherein the heat generator (30) comprises electric heating rods, an oil burner, a vegetable oil burner, a gas burner, a water/air heat exchanger, an exhaust gas heat exchanger or a heat pump.

12. Toaster according to any one of claims 1 to 11, further comprising an air-through preheater (110) for preheating the seeds before toasting and/or an air-through aftercooler (120) for heat recovery and for cooling the seeds after toasting.

13. Method for toasting seeds, in particular soybeans, wherein the method comprises the following steps:
a. flowing seeds through a toasting housing (35) having a toasting region (40) from top to bottom, controlled by a dosing unit downstream of the toasting region;
b. arranging at least one elongated air inlet duct (50) extending into the toasting region (40) into the toasting region (40);
c. arranging at least one elongated air outlet duct (60) extending into the toasting region (40) into the toasting region (40);
d. entering an air flow (30) heated by a heat generator (30) in the form of an electric heater from the air inlet duct (50) into the toasting region (40);
e. flowing through and heating the seeds to be toasted with the air flow (20);
f. exiting the air flow (20) from the toasting region (40) into the air outlet duct (60) to then exit from the toasting housing (35); and
g. guiding the air flow (20) in an air circuit, wherein the moisture releasing the seeds can accumulate in the air flow.

14. Method for toasting seeds according to claim 13, wherein the dosing unit (90, 100) is a component of the toaster (1) or wherein the dosing unit (90, 100) is an external dosing unit downstream of a toaster (1).

## Revendications

1. Grilloir (1) pour griller des semences, en particulier des graines de soja, comprenant :
a. une enceinte de grillage (35) avec une zone de grillage (40) qui peut être traversée par des semences de haut en bas ;
b. un ventilateur (10) qui produit un flux d'air (20) ; et
c. un générateur de chaleur (30) pour chauffer le flux d'air (20) ;
d. au moins un canal d'entrée d'air allongé (50) disposé dans l'enceinte de grillage (35) et pénétrant dans la zone de grillage (40) ;
e. au moins un canal de sortie d'air allongé (60) disposé dans l'enceinte de grillage (35) et pénétrant dans la zone de grillage (40) ; dans lequel
f. ledit au moins un canal d'entrée d'air (50) et ledit au moins un canal de sortie d'air (60) débouchent respectivement dans la zone de grillage (40) ; de telle façon que
g. le flux d'air chauffé (20, 22) pénétrant dans l'enceinte de grillage (35) puisse entrer dans la zone de grillage (40) à la sortie du canal d'entrée d'air (50) et traverser les semences à griller en se dirigeant vers le canal de sortie d'air (60) pour quitter l'enceinte de grillage (35) par celui-ci, le flux d'air (20) traversant la zone de grillage (40) et chauffant les semences ; et dans lequel
h. le flux d'air (20) circule en circuit d'air et l'humidité cédée par les semences peut s'enrichir dans le flux d'air.

2. Grilloir selon la revendication 1, comprenant également une unité de dosage (90) pour doser le flux massique de semences à travers la zone de grillage (40).

3. Grilloir selon la revendication 2, dans lequel l'unité de dosage (90) est disposée à la sortie de la zone de grillage (40).

4. Grilloir selon la revendication 3, dans lequel l'unité de dosage (90) comporte un sas (100) qui est un sas à compartiments multiples (102, 104) afin de garantir un prélèvement à plat des semences hors de la zone de grillage (40).

5. Grilloir selon une des revendications 1 à 4, dans lequel le grilloir est agencé de façon que la température de l'air dans la zone de grillage (40) s'élève en moyenne jusqu'à environ 200 °C et/ou que la température des semences dans la zone de grillage (40) soit de 90 °C à 130 °C.

6. Grilloir selon une des revendications 1 à 5, comprenant en outre un cyclone (70) pour nettoyer le flux d'air (20), le cyclone (70) étant disposé préférentiellement avant le générateur de chaleur (30).

7. Grilloir selon la revendication 1, dans lequel lesdits canaux d'entrée et de sortie d'air (50, 60) pénétrant dans la zone de grillage (40) sont disposés horizontalement.

8. Grilloir selon une des revendications 1 à 7, dans lequel il est prévu une pluralité de canaux d'entrée et de sortie d'air (50, 60), lesquels sont disposés respectivement à distance les uns à côté des autres.

9. Grilloir selon une des revendications 1 à 8, dans lequel lesdits canaux d'entrée d'air (50) et lesdits canaux de sortie d'air (60) respectifs se terminent dans tous les cas vers le haut en pointe ou de façon tronquée dans la zone de grillage (40), ou se présentent sous forme arrondie dans leur partie supérieure, et au moins une ouverture d'air (52, 62) respective se trouve dans leur partie inférieure.

10. Grilloir selon la revendication 9, dans lequel le flux d'air chauffé (20, 22) sort par ladite ouverture d'air (52) dans la partie inférieure du canal d'entrée d'air (50) et, après avoir traversé les semences à griller, pénètre dans ladite ouverture d'air (62) dans la partie inférieure du canal de sortie d'air (60) afin de quitter ainsi l'enceinte de grillage (35).

11. Grilloir selon une des revendications 1 à 10, dans lequel le générateur de chaleur (30) inclut des barres chauffantes électriques, un brûleur à fioul, un brûleur à huile végétale, un brûleur à gaz, un échangeur thermique eau/air, un échangeur thermique de gaz brûlés ou une pompe à chaleur.

12. Grilloir selon une des revendications 1 à 11, comprenant également un préchauffeur à air traversant (110) pour préchauffer les semences avant le grillage et/ou un refroidisseur à air traversant (120) pour récupérer de la chaleur et pour refroidir les semences après le grillage.

13. Procédé pour griller des semences, en particulier des graines de soja, le procédé comprenant les étapes suivantes :
a. traversée de haut en bas, par des semences, d'une enceinte de grillage (35) avec une zone de grillage (40), commandée par une unité de dosage disposée en aval de la zone de grillage ;
b. disposition, dans la zone de grillage (40), d'au moins un canal d'entrée d'air allongé (50) débouchant dans la zone de grillage (40) ;
c. disposition, dans la zone de grillage (40), d'au moins un canal de sortie d'air allongé (60) débouchant dans la zone de grillage (40) ;
d. entrée d'un flux d'air (30), chauffé par l'intermédiaire d'un générateur de chaleur (30) en forme de chauffage électrique, dans la zone de grillage (40) à partir du canal d'entrée d'air (50) ;
e. traversée et réchauffage des semences à griller avec le flux d'air (20) ; et
f. sortie du flux d'air (20) hors de la zone de grillage (40) vers le canal de sortie d'air (60) pour qu'il quitte ensuite l'enceinte de grillage (35) ;
g. envoi du flux d'air (20) dans un circuit d'air, l'humidité cédée par les semences pouvant enrichir le flux d'air.

14. Procédé de grillage de semences selon la revendication 13, dans lequel l'unité de dosage (90, 100) est un composant du grilloir (1), ou dans lequel l'unité de dosage (90, 100) est une unité de dosage externe disposée en aval d'un grilloir (1).
